**Europäisches Patentamt**

**European Patent Office**

**Office européen des brevets**

(11) Veröffentlichungsnummer: **0 121 708**
**A2**

(12) **EUROPÄISCHE PATENTANMELDUNG**

(21) Anmeldenummer: 84101842.7

(22) Anmeldetag: 22.02.84

(51) Int. Cl.³: **G 02 B 7/11**

(30) Priorität: 12.03.83 DE 3308852

(43) Veröffentlichungstag der Anmeldung: 17.10.84
**Patentblatt 84/42**

(84) Benannte Vertragsstaaten: **AT BE CH FR GB LI**

(71) Anmelder: **Kernforschungszentrum Karlsruhe GmbH,
Weberstrasse 5, D-7500 Karlsruhe 1 (DE)**

(72) Erfinder: **Vollath, Dieter, Dr., Primelweg 3,
D-7513 Stutensee-Fr. (DE)**

(54) **Verfahren und Einrichtung zum automatischen Fokussieren.**

(57) Das analoge Bildpunktsignal $u_e$ jedes einer Vielzahl von Bildpunkten wird zu einem vorbestimmten Zeitpunkt in Vergleichseinheiten 6, 7 mit einem ersten und einem zweiten stochastischen Signal der Rauschgeneratoren 8, 9 verglichen und ein erstes und/oder zweites Vergleichssignal $I_1$, $I_2$ gebildet, wenn das Bildpunktsignal kleiner als das stochastische ist.

Ein erster Zähler 12 bildet die Summe $Z_1 = \Sigma p_i$ aller Impulse der ersten Vergleichssignale $I_1$, ein zweiter Zähler 13 die Summe $Z_2 = \Sigma p_i^2$ aller mit einem UND-Gatter 11 bestimmten gleichzeitig auftretenden Impulse der ersten und zweiten Vergleichssignale $I_1$, $I_2$ und ein dritter Zähler 14 die Summe $Z_0$ aller auszuwertenden Bildpunkte.

Ein Rechner 15 ermittelt das Fokussierungskriterium

$$FOK_1 = \frac{Z_0 \cdot Z_2 - Z_1^2}{Z_1^2} = Z_0 \frac{2\sigma^2}{\mu^2} \text{ oder } FOK_2 = Z_0 \cdot Z_2 - Z_1^2 = \sigma^2 \cdot Z_0^2$$

mit $\sigma$ = Standardabweichungen und $\mu$ = Mittelwert, stellt $FOK_1$ oder $FOK_2$ extremal ein und gibt ein entsprechendes Fokussiersignal an den Schrittmotor 3 des Mikroskopes.

Das Verfahren verwendet ausschließlich Mittelwerte, so daß die örtliche Lage in die Auswertung einbezogener Bildpunkte unerheblich ist.

- 1 -

## Verfahren und Einrichtung zum automatischen Fokussieren

Die Erfindung betrifft ein Verfahren und eine Einrichtung zum automatischen Fokussieren nach dem Oberbegriff des Anspruches 1.

Bei der automatischen Analyse von Mikroskopbildern ist es häufig erforderlich, die Fokussierung am Mikroskop nachzustellen, weil infolge unterschiedlicher Dicke der Präparate und/oder der diese aufnehmenden Platten insbesondere beim Verschieben des Präparates unter dem Objektiv des Mikroskopes ständig Bildunschärfen auftreten, die das Ergebnis einer Analyse beeinträchtigen oder infrage stellen können.

Ein Fokussieren von Hand scheidet aus, weil dadurch eine sinnvolle Nutzung der Einrichtung zur automatischen Analyse ausgeschlossen würde.

Es ist ein Verfahren zum automatischen Fokussieren bekannt (DE-OS 29 10 875), bei dem von der Autokorrelationsfunktion der Helligkeitsverteilung des Bildes an einer vorbestimmten Stelle der Mittelwert der Autokorrelationsfunktion abgezogen und dieser Wert durch den Mittelwert der Autokorrelationsfunktion dividiert und das Maximum der so gewonnenen normierten Funktion iterativ durch Änderung der Fokussierung aufgesucht wird.

Der Erfindung liegt die Aufgabe zugrunde, dieses bekannte Verfahren weiterzuentwickeln und so zu vereinfachen, daß dessen Durchführung mit einer nur geringen Aufwand erfordernden Einrichtung möglich ist.

Diese Aufgabe wird bei einem Verfahren und einer Einrichtung zum automatischen Fokussieren nach dem Oberbegriff des Anspruches 1 durch die in dessen Kennzeichen und im Kennzeichen des Anspruches 4 genannten Merkmale gelöst.

Die mit dem vorgeschlagenen Verfahren und der zu dessen Durchführung entwickelten Einrichtung erzielten Vorteile bestehen insbesondere darin, daß zum Erzeugen der Fokussiersignale ausschließlich Mittelwerte verarbeitet werden, so daß der Ort im Bild, an dem die Amplitudenvergleiche durchgeführt werden, ohne Bedeutung ist.

Das vorgeschlagene Verfahren und die Einrichtung zu dessen Durchführung werden anhand der Zeichnung im folgenden näher beschrieben.

Es zeigen:

Fig. 1    das Blockschaltbild einer Fokussiereinrichtung,

Fig. 2    das Blockschaltbild der Signalverarbeitungseinheit.

Das Blockschaltbild einer Fokussiereinrichtung mit der

- 3 -

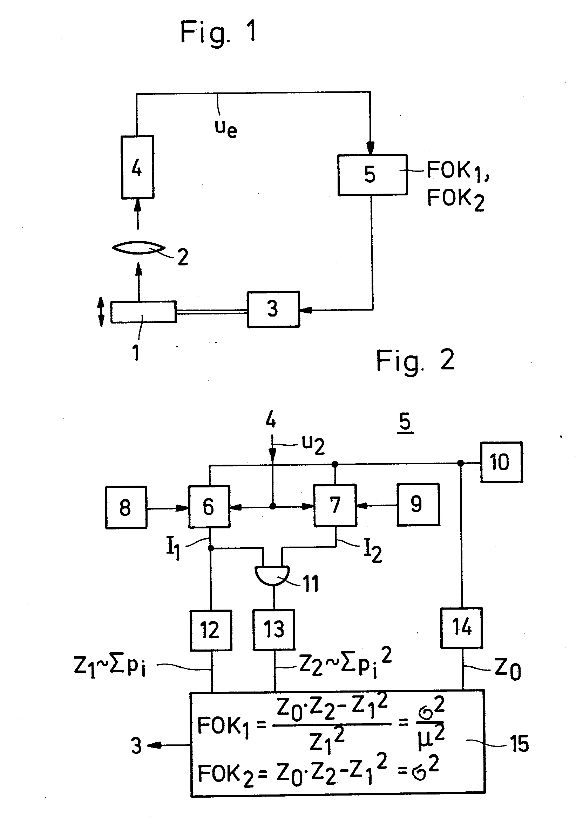

das vorgeschlagene Verfahren ausgeführt werden kann ist in Fig. 1 dargestellt.

Der Probenträger 1 eines Mikroskopes 2 ist zum Fokussieren durch einen Schrittmotor 3 verstellbar ausgebildet. Das im Mikroskop 2 sichtbare Bildelement der Probe wird von einer TV-Kamera 4 in die Bildpunkte eines Bildrasters zerlegt und für jeden der Bildpunkte eine der mittleren Leuchtdichte dieses Bildpunktes entsprechende analoge Signalspannung $u_e$ erzeugt; die in einer der TV-Kamera 4 nachgeschalteten Signalverarbeitungseinheit 5 in ein Fokussierungskriterium $FOK_1$ oder $FOK_2$ umgesetzt wird.

Die Signalverarbeitungseinheit 5 wird anhand des in Fig. 2 gezeigten Blockschaltbildes näher erläutert. Der das analoge Bildpunktsignal $u_e$ führende Signalausgang der TV-Kamera 4 ist auf den Signaleingang einer ersten Vergleichseinheit 6 und einer zweiten Vergleichseinheit 7 geschaltet. An die erste Vergleichseinheit 6 ist ein ein erstes stochastisches Signal erzeugender erster Rauschgenerator 8 und an die zweite Vergleichseinheit 7 ist ein ein zweites stochastisches Signal erzeugender zweiter Rauschgenerator 9 angeschlossen.

Die erste und die zweite Vergleichseinheit 6, 7 weisen jeweils einen Steuereingang auf, an dem ein die Zeitpunkte eines Vergleiches des analogen Bild-

- 4 -

punktsignales $u_e$ mit dem ersten und dem zweiten stochastischen Signal des ersten und des zweiten Rauschgenerators 8, 9 festlegender Taktgeber 10 angeschlossen ist.

Ist das Bildpunktsignal $u_e$ kleiner als das erste und/oder als das zweite stochastische Signal, so wird ein erstes und/oder ein zweites Vergleichssignal $I_1$, $I_2$ gebildet.

Der das erste Vergleichssignal $I_1$ führende Ausgang der ersten Vergleichseinheit 6 ist auf einen ersten Eingang eines UND-Gatters 11 der das zweite Vergleichssignal $I_2$ führende Ausgang der zweiten Vergleichseinheit 7 ist auf einen zweiten Eingang des UND-Gatters 11 geschaltet.

Der Ausgang der ersten Vergleichseinheit 6 ist gleichzeitig auf einen ersten Zähler (12) geschaltet, der die während der Zeitdauer einer Bildauswertung gebildeten Impulse der ersten Vergleichssignale $I_1$ als eine erste Meßgröße $Z_1$ zählt, die der Summe der Wahrscheinlichkeiten $\Sigma p_i$ über die Helligkeitsverteilung aller in die Bildauswertung einbezogenen Bildpunkte proportional ist.

Der Ausgang des UND-Gatters 11 ist auf einen zweiten Zähler 13 geschaltet und gibt nur dann einen Impuls, wenn ein erstes und ein zweites Vergleichssignal $I_1$, $I_2$ gleichzeitig auftreten. Das UND-Gatter 11 bildet also die Konjunktion $I_1 \wedge I_2$ und der zweite Zähler 13 zählt als eine zweite Meßgröße $Z_2$, die der Summe der Quadrate der Wahrscheinlichkeiten $\sum p_i^2$ über der Helligkeitsverteilung aller in die Bildauswertung einbezogenen Bildpunkte proportional ist.

An den Taktgeber 10 ist ein dritter Zähler 14 angeschlossen, der die Summe aller in die Auswertung einbezogenen Bildpunkte als eine dritte Meßgröße $Z_o$ bestimmt.

Die Ausgänge des ersten bis dritten Zählers 12, 13, 14 sind auf einen Rechner 15 geschaltet, der aus den ersten bis dritten Meßgrößen $Z_1$, $Z_2$, $Z_o$ die Funktion

$$\text{FOK}_1 = \frac{Z_o \cdot Z_2 - Z_1^2}{Z_1^2} \quad \text{oder} \quad \text{FOK}_2 = Z_o \cdot Z_2 - Z_1^2$$

bildet und deren Höchstwert einstellt.

Aus der DE-OS 29 10 875 ist bekannt, daß ein Bild scharf eingestellt ist, wenn die Funktion

$$\text{FOK}_1' = \frac{\sigma^2}{\mu^2} \quad \text{oder} \quad \text{FOK}_2' = \sigma^2$$

extremal ist, wenn $\sigma$ die Standardabweichung und $\mu$ der Mittelwert der Helligkeitswerte aller Bildpunkte eines Bildes ist. Die mit dem beschriebenen

- 6 -

Verfahren gemessenen Größen sind $FOK_1 = Z_o^2 \cdot FOK_1'$ bzw. $FOK_2 = Z_o^2 \cdot FOK_2'$.

Der das Fokussierungssignal führende Ausgang des Rechners 15 ist mit dem Schrittmotor 3 verbunden.

Da dem vorgeschlagenen Verfahren eine Bildauswertung zugrunde liegt, die ausschließlich Mittelwerte verarbeitet, ist die örtliche Lage der Bildpunkte, an denen die Amplitudenvergleiche durchgeführt werden ohne Bedeutung.

In bestimmten Anwendungsfällen kann es auch vorteilhaft sein, das analoge Bildpunktsignal $u_e$ der TV-Kamera 4 vor dessen Eingabe in die Signalverarbeitungseinheit 5 zu differenzieren und die Größen

$$\left|\frac{\partial u_e}{\partial t}\right| \quad \text{oder} \quad \left|\frac{\partial u_e}{\partial t}\right|^2 \quad \text{herzustellen.}$$

Bezugszeichenliste:

| | | | |
|---|---|---|---|
| 1 | Probenträger | 15 | Rechner |
| 2 | Mikroskop | $\sigma$ | Standardabweichung |
| 3 | Schrittmotor | $\mu$ | Mittelwert |
| 4 | TV-Kamera | | |
| 5 | Signalverarbeitungseinheit | | |
| $u_e$ | analoges Bildpunktsignal | | |
| 6 | 1.Vergleichseinheit | | |
| 7 | 2.Vergleichseinheit | | |
| 8 | 1.Rauschgenerator an 6 | | |
| 9 | 2.Rauschgenerator an 7 | | |
| 10 | Taktgeber | | |
| $I_1$ | 1.Vergleichssignal an 6 | | |
| $I_2$ | 2.Vergleichssignal an 7 | | |
| 11 | UND-Gatter | | |
| 12 | 1.Zähler | | |
| $z_1$ | 1.Meßgröße $z_1 \sim \sum p_i$ | | |
| $\sum p_i$ | Summe der Wahrscheinlichkeiten | | |
| $\sum p_i^2$ | Summe der Quadrate der Wahrscheinlichkeiten | | |
| 13 | 2.Zähler | | |
| $z_2$ | 2.Meßgröße $z_2 \sim \sum p_i^2$ | | |
| 14 | 3.Zähler | | |
| $z_0$ | 3.Meßgröße | | |

$$FOK_1 = \frac{\sigma^2}{\mu^2} \cdot z_0^2$$

$$FOK_2 = \sigma^2 \cdot z_0^2$$

Kernforschungszentrum   Karlsruhe, den 10.März 83
Karlsruhe GmbH     PLA 8313 Hä/he
ANR 1oo2597

Patentansprüche:

1. Verfahren zum automatischen Fokussieren, bei dem das Bild in die Bildpunkte eines Bildrasters zerlegt und für jeden der Bildpunkte ein dessen Helligkeit analoges Bildpunktsignal ($u_e$) erzeugt wird, gekennzeichnet durch folgende Merkmale,

a) das analoge Bildpunktsignal ($u_e$) jedes einer Vielzahl von Bildpunkten wird zu den von einem Taktgeber (1O) vorbestimmten Zeitpunkten mit einem ersten stochastischen Signal und gleichzeitig mit einem von diesem unabhängigen zweiten stochastischen Signal verglichen,

b) ist das Bildpunktsignal ($u_e$) an den von dem Taktgeber (1O) vorgegebenen Zeitpunkten kleiner als das erste und/oder das zweite stochastische Signal, so wird eine erste und/oder eine zweite normierte Impulsfolge als erstes oder zweites Vergleichssignal ($I_1$, $I_2$) gebildet,

c) als eine erste Meßgröße ($Z_1$) wird die Anzahl aller während des Fokussierens gebildeten Impulse der ersten Vergleichssignale ($I_1$) bestimmt, die der Summe der Wahrscheinlichkeiten $\Sigma p_i$ über die Helligkeitsverteilung aller in die Bildauswertung einbezogenen Bildpunkte proportional ist,

d) als eine zweite Meßgröße ($Z_2$) wird die Anzahl aller während des Fokussierens gebildeten und

- 2 -

gleichzeitig auftretenden ersten und zweiten Vergleichssignale ($I_1$, $I_2$) bestimmt, die der Summe der Quadrate der Wahrscheinlichkeiten $\Sigma p_i^2$ über die Helligkeitsverteilung aller in die Bildauswertung einbezogenen Bildpunkte proportional ist,

e) als dritte Meßgröße ($Z_o$) wird die Summe aller in die Auswertung einbezogenen Bildpunkte bestimmt,

f) aus der ersten bis dritten Meßgröße ($Z_1$, $Z_2$, $Z_o$) wird das Fokussierungskriterium

$$\left(FOK_1 = \frac{Z_o \cdot Z_2 - Z_1^2}{Z_1^2}\right) \text{ ermittelt und dessen}$$

Höchstwert eingestellt.

2. Verfahren nach Anspruch 1, dadurch gekennzeichnet, daß das Fokussierungskriterium als nichtnormierte Größe

$$\left(FOK_2 = Z_o \cdot Z_2 - Z_1^2\right) \text{ verwendet wird.}$$

3. Verfahren nach Anspruch 1, dadurch gekennzeichnet, daß das Fokussierungskriterium von dem Betrag des Differentialquotienten des analogen Bildsignales ($\left|\frac{\partial u}{\partial t}\right|$ oder $\left|\frac{\partial u}{\partial t}\right|^2$) abgeleitet wird.

0121708

- 3 -

4. Einrichtung zum Durchführen des Verfahrens nach Anspruch 1 mit einem Mikroskop (2), dessen Probenträger (1) zum Fokussieren durch einen Schrittmotor (3) verstellbar ist, mit einer TV-Kamera (4) zum Zerlegen des Mikroskopbildes in die Bildpunkte eines Bildrasters und zum Erzeugen einer der mittleren Leuchtdichte eines Bildpunktes entsprechenden Signalspannung für jeden der Bildpunkte, gekennzeichnet durch folgende Merkmale,

a) der ein analoges Bildpunktsignal ($u_e$) führende Signalausgang der TV-Kamera (4) ist auf den Signaleingang einer ersten Vergleichseinheit (6) und einer zweiten Vergleichseinheit (7) geschaltet, die in eine Signalverarbeitungseinheit (5) integriert sind,

b) an die erste Vergleichseinheit (6) ist ein das erste stochastische Signal erzeugender erster Rauschgenerator (8), an die zweite Vergleichseinheit (7) ist ein das zweite stochastische Signal erzeugender zweiter Rauschgenerator (9) angeschlossen,

c) auf je einen Steuereingang der ersten Vergleichseinheit (6) und der zweiten Vergleichseinheit (7) ist ein den Rhythmus für den Vergleich des analogen Bildpunktsignales ($u_e$) mit dem ersten und dem zweiten stochastischen Signal vorgebender Taktgeber (1o) geschaltet,

d) der das erste Vergleichssignal ($I_1$) führende Ausgang der ersten Vergleichseinheit (6) ist auf einen ersten Eingang eines UND-Gatters (11), der das zweite Vergleichssignal ($I_2$) führende Ausgang der zweiten Vergleichseinheit (7) ist auf einen zweiten Eingang des UND-Gatters (11) geschaltet,

e) der Ausgang der ersten Vergleichseinheit (6) ist gleichzeitig auf einen ersten Zähler (12) geschaltet,der die die erste Meßgröße ($Z_1$) darstellenden, während einer Bildauswertung auftretenden ersten Vergleichssignale ($I_1$) zählt,

f) dem Ausgang des UND-Gatters (11) ist ein zweiter Zähler (13) zum Zählen aller die zweite Meßgröße ($Z_2$) darstellenden, während einer Bildauswertung gleichzeitig auftretenden ersten und zweiten Vergleichssignale ($I_1$, $I_2$) nachgeschaltet,

g) mit dem Taktgeber (1o) ist ein dritter Zähler (14) zum Zählen aller die dritte Meßgröße ($Z_o$) darstellenden, in die Auswertung einbezogenen Bildpunkte verbunden,

h) die Ausgänge des ersten bis dritten Zählers (12, 13, 14) sind auf eine aus den ersten bis dritten Meßgrößen ($Z_1$, $Z_2$, $Z_o$) ein Fokussiersignal bildenden Rechner (15) geschaltet, dessen das Fokussierungssignal führender Ausgang mit dem Schrittmotor (3) verbunden ist.

Fig. 1

Fig. 2

$$FOK_1 = \frac{Z_0 \cdot Z_2 - Z_1^2}{Z_1^2} = \frac{\sigma^2}{\mu^2}$$

$$FOK_2 = Z_0 \cdot Z_2 - Z_1^2 = \sigma^2$$